# EUROPÄISCHE PATENTANMELDUNG

(11) **EP 2 980 492 A1**
(43) Veröffentlichungstag der Anmeldung: **03.02.2016**
(21) Anmeldenummer: 15001149.2
(22) Anmeldetag: 18.04.2015
(51) Int. Cl.: F24D 3/08, F24D 11/02, F24D 17/02, F28D 20/00

(54) **DRUCKLOSER THERMISCHER SYSTEMSPEICHER**

(30) Priorität: 29.07.2014 AT 5962014
(71) Anmelder: Ennemoser, Johannes Paul, 8010 Graz (AT)
(72) Erfinder: Ennemoser, Johannes Paul, 8010 Graz (AT)

(57) **Zusammenfassung**

Es wird ein druckloser thermischer Systemspeicher (1) für Wärmepumpen beschrieben, der thermische Energie zum Heizen und Kühlen von Gebäuden oder Industrieanlagen speichert. Der thermische Systemspeicher (1) besteht aus einem Behälter, in dem sich das Wärmeträger Medium, mindestens ein Wärmetauscher für das Warmwasser (4 bis 6) und jeweils ein Wärmetauscher für den Kondensator (2) und den Verdampfer (3) von mindestens einer Wärmepumpe befinden.

Der Wärmetauscher für das Warmwasser hat einen Kaltwasser Anschluss (4) und einen Warmwasser Anschluss (5), sowie einen weiteren Anschluss (6) für die Anhebung der Frischwasser oder Betriebswasser Temperatur.

Der drucklose thermische Systemspeicher (1) hat mehrere Anschlüsse an das Wärmeträger Medium (21 bis 27) für eine oder mehrere Wärmequellen und oder Kältequellen, sowie Anschlüsse die zum Heizen und Kühlen von einem Gebäude oder einer Industrieanlage eingesetzt werden.

Die Schichtspeicherung wird mit Rohren (25), die seitliche Löcher aufweisen und mit horizontal angebrachten Lochplatten (9) unterstützt. Für die Steuerung der Wärmepumpe sowie der angeschlossenen Umwälzpumpen sind im Systemspeicher (1) drei Temperatur Fühler (11 bis 13) vorgesehen. "Figur 1"

## Beschreibung

Die Erfindung betrifft einen drucklosen thermischen Systemspeicher für Wärmepumpen aus einem Behälter mit mindestens drei Wärmetauschern und mehreren Anschlüssen an das Wärmeträger Medium.

Der Erfindung liegt die Aufgabe Zugrunde mit Hilfe einer Wärmepumpe und Umwälzpumpen ein Gebäude oder eine Industrieanlage zu heizen oder zu kühlen, die Temperatur des Frischwassers oder des Betriebswassers anzuheben, sowie thermische Energie aus unterschiedlichen Wärmequellen oder Kältequellen zu speichern und der Wärmepumpe mit annähernd konstanter Temperatur zur Verfügung zu stellen.

Die Aufgabe wird dadurch gelöst, dass der Wärmetauscher im oberen Bereich des Systemspeichers als Kondensator einer Wärmepumpe und der Wärmetauscher im unteren Bereich als Verdampfer einer Wärmepumpe eingesetzt wird. Die Vorteile dieser Anordnung sind kurze Leitungswege, ein geringer Installationsaufwand, eine hohe Kühlleistung sowie ein Systemspeicher, der für die meisten Anwendungen in einem Gebäude oder in einer Industrieanlage eingesetzt werden kann. Der Systemspeicher kann je nach Anforderung mehrere Wärmetauscher für mehrere Wärmepumpen aufweisen.

Der Wärmetauscher für das Warmwasser weist einen Zulauf und einen Ablauf, sowie einen weiteren Anschluss für die Anhebung der Frischwasser oder Betriebswasser Temperatur auf. Erfindungsgemäß können auch zwei separate Wärmetauscher für das Warmwasser vorgesehen werden, die außerhalb des Systemspeichers verbunden werden.

Aufgrund der relativ geringen Temperatur einiger Wärmequellen ist es wirtschaftlich und ökologisch sinnvoll dieses Wärmepotenzial direkt zur Anhebung der Frischwasser Temperatur einzusetzen.

Weist der Wärmetauscher für das Warmwasser einen direkten Kontakt zum Kondensator auf kann die Wärmeübertragungsleistung erhöht werden.

Wird der Warmwasser Wärmetauscher mit einer thermisch isolierenden Verbindung ausgeführt, kann in der betriebslosen Zeit die Abwanderung der thermischen Energie vom oberen in den unteren Bereich des Systemspeichers verhindert werden.

Die Wärmetauscher können als Gleichstrom Wärmetauscher und oder als Gegenstrom Wärmetauscher konstruiert werden, wodurch im gewünschten Bereich eine gleichmäßig hohe Temperatur, sowie eine höhere Wärmeübertragungsleistung erreicht werden kann.

Damit die Schichtspeicherung im Systemspeicher unterstützt wird, können horizontal angebrachte Platten vorgesehen werden, die mehrere Löcher aufweisen. Die Platten werden vorzugsweise oberhalb des Verdampfers und oberhalb des Frischwasser Anschlusses, beziehungsweise zwischen den Anschlüssen von zwei separaten Wärmetauschern für das Frischwasser und das Warmwasser angebracht.

Der Systemspeicher kann an unterschiedliche Wärmequellen beziehungsweise Kältequellen angeschlossen werden, wie zum Beispiel Solaranlagen, Lüftungsanlagen, Abwasser oder geothermische Anlagen. Die Wärmequellen beziehungsweise Kältequellen und die Anschlüsse für die Heizung und Kühlung eines Gebäudes oder einer Industrieanlage werden direkt an das Wärmeträger Medium des Systemspeichers angeschlossen.

Die Anschlüsse an das Wärmeträger Medium werden in unterschiedlichen Höhen angebracht. Alle Anschlüsse können gleichzeitig als Vorlauf und Rücklauf für mehrere unterschiedliche Zwecke eingesetzt werden.

Alle angeschlossenen Leitungen müssen über die Oberkante des Systemspeichers geführt werden, damit im Falle eines Rohrbruchs das Wärmeträger Medium im Systemspeicher nicht abfließen kann.

Die Einleitung vom Wärmeträger Medium in den Systemspeicher erfolgt vorzugsweise mit Hilfe eines Rohres, das mehrere, seitlich angebrachte Löcher aufweist. Der Vorteil dieser Einleitung ist die verringerte Strömungsgeschwindigkeit, die zu einer geringeren Verwirbelung des Wärmeträger Mediums führt. Des Weiteren kann sich das Wärmeträger Medium leichter in jene Schicht des Systemspeichers einspeichern, das die gleiche Temperatur aufweist.

Vor allem im Bereich der Gebäudetechnik müssen relativ kleine Mengen des Wärmeträger Mediums durch eine Wärmequelle beziehungsweise Kältequelle gepumpt werden, sodass der Betrieb der Umwälzpumpen anlaufverzögert und getaktet ausgeführt werden kann. Der Vorteil der Anlaufverzögerung und der Taktung ist die längere Zeit, die das Wärmeträger Medium zu Erwärmung zur Verfügung hat. Des Weiteren ist die Geschwindigkeit der Wärmeübertragung wesentlich größer, wenn die Temperaturdifferenz der Wärmeträger Medien größer ist.

Für die Steuerung der Wärmepumpe und der Umwälzpumpen benötigt der Systemspeicher mindestens drei Temperaturfühler. Der Temperaturfühler im oberen Bereich des Systemspeichers wird unterhalb des Anschlusses für den Heizungsvorlauf angebracht, wodurch mit einem Temperaturfühler die Speicherung thermischer Energie für das Warmwasser und der Heizungsanlage gesteuert wird. Der Temperaturfühler im mittleren Bereich des Systemspeichers wird auf der gleichen Höhe wie der zusätzliche Anschluss für das Frischwasser angebracht. Dieser Temperaturfühler überwacht die maximal zulässige Temperatur des Frischwassers beziehungsweise des Betriebswassers.

Im unteren Bereich des Systemspeichers wird die Temperatur der Wärmequelle einer Wärmepumpe gesteuert.

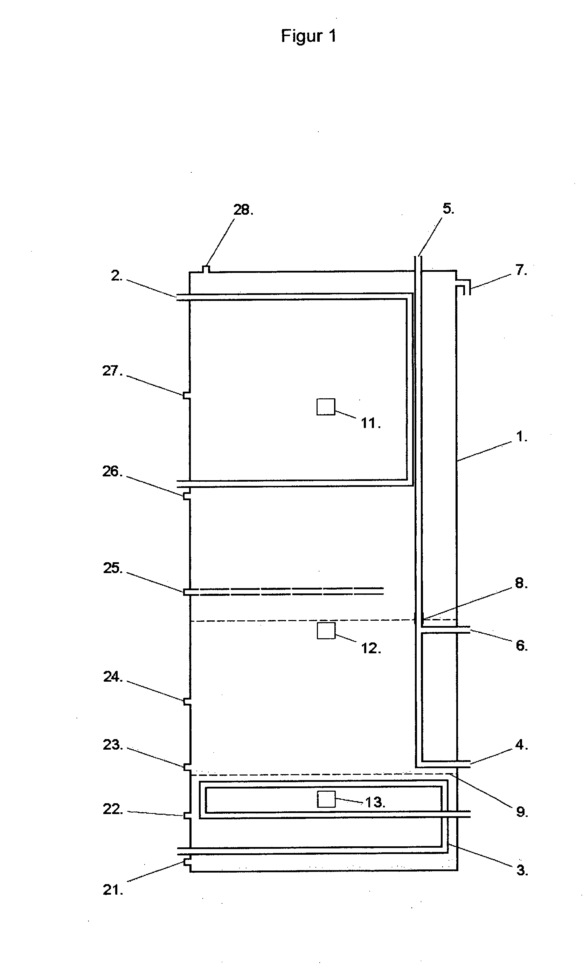

Beschreibung der Funktionsweise anhand der Figur 1, die den Querschnitt eines Systemspeichers 1 mit sieben Anschlüssen an das Wärmeträger Medium 21 bis 27 und einen Anschluss für die Entlüftung 28 zeigt.

Der Wärmetauscher für das Warmwasser hat einen Kaltwasser Anschluss 4 und einen Anschluss für das Warmwasser 5, sowie einen weiteren Anschluss 6 für die Anhebung der Frischwasser Temperatur und ist mit einer wärmeisolierenden Verbindung 8 ausgestattet. Der Überlauf 7 befindet sich an der rechten Seite des Systemspeichers 1.

Der obere Wärmetauscher 2 wird als Kondensator einer Wärmepumpe eingesetzt. Der untere Wärmetauscher wird als Verdampfer 3 einer Wärmepumpe eingesetzt. Der Systemspeicher 1 speichert mit Hilfe einer Wärmepumpe im oberen Bereich Wärmenergie mit einem hohen Temperaturniveau und im unteren Bereich Wärmenergie mit einem geringen Temperaturniveau, die zur Heizung und Kühlung von einem Gebäude oder einer Industrieanlage eingesetzt werden kann. Die thermische Schichtung wird mit zwei Platten 9 unterstützt, die einige Löcher aufweisen. Die Einleitung des Wärmeträger Mediums über den Anschluss 25 erfolgt mit einer verringerten Strömungsgeschwindigkeit.

Das kalte Wärmeträger Medium im Systemspeicher 1 wird mit Hilfe einer Umwälzpumpe, zum Beispiel vom Anschluss 21 oder 22, einer Wärmequelle zugeführt und erwärmt in den Systemspeicher 1 zurück geleitet.

Einige Wärmequellen weisen Aufgrund von tageszeitlichen oder jahreszeitlichen Schwankungen erhebliche Temperatur Unterschiede auf. Das Wärmeträger Medium von den Wärmequellen kann mit Hilfe von Ventilen in jenen Bereich des Systemspeichers 1 eingeleitet werden, in dem in etwa das gleiche Temperaturniveau vorhanden ist. Der Anschluss 24 befindet sich zwischen dem Kaltwasser Anschluss 4 und dem Frischwasser Anschluss 6 und wird für Wärmequellen beziehungsweise Kältequellen mit einer tageszeitlichen und oder jahreszeitlichen Schwankung und einem relativ geringen Temperaturniveau benötigt. Wird das kalte Wärmeträger Medium dieser Wärmequelle zugeführt und in den Anschluss 24 eingeleitet, gleicht sich die Temperatur an das Niveau des Kaltwassers an, das wiederrum bei Wärmepumpen zu einer erhöhten Betriebssicherheit und zu einer höheren Leistungszahl führen kann.

Der Anschluss 25 wird oberhalb des mittleren Temperaturfühlers 12 und einer eventuell angebrachten Platte mit Löchern 9 vorgesehen. Die Einleitung sollte in diesem Bereich mit einer verringerten Strömungsgeschwindigkeit erfolgen. Der Anschluss 26 wird unterhalb des Kondensators 2 angebracht und kann für die Einleitung von thermischer Energie aus Solaranlagen mit einem relativ geringen Temperaturniveau verwendet werden. Der Anschluss 27 wird oberhalb des oberen Temperaturfühlers 11 angebracht und wird für den Heizungsvorlauf benötigt. Der Anschluss 28 wird am Höchsten Punkt des Systemspeichers angebracht und wird zur Entlüftung einzelner Anlagenteile eingesetzt.

## Patentansprüche

1. Druckloser thermischer Systemspeicher (1) aus einem Behälter mit mindestens drei Wärmetauschern und mehreren Anschlüssen an das Wärmeträger Medium (21 bis 27), **dadurch gekennzeichnet, dass** der Wärmetaucher für das Warmwasser einen zusätzlichen Anschluss (6) für die Anhebung der Frischwasser oder Betriebswasser Temperatur aufweist.

2. Druckloser thermischer Systemspeicher (1) aus Anspruch 1, **dadurch gekennzeichnet, dass** zwei separate Wärmetaucher für das Warmwasser vorgesehen werden.

3. Druckloser thermischer Systemspeicher (1) aus Anspruch 1 bis 2, **dadurch gekennzeichnet, dass** der Wärmetauscher im oberen Bereich des Behälters als Kondensator (2) einer Wärmepumpe eingesetzt wird.

4. Druckloser thermischer Systemspeicher (1) aus Anspruch 1 bis 3, **dadurch gekennzeichnet, dass** der Wärmetauscher für das Warmwasser einen direkten Kontakt zum Kondensator (2) aufweist.

5. Druckloser thermischer Systemspeicher (1) aus Anspruch 1 bis 4, **dadurch gekennzeichnet, dass** der Wärmetauscher im unteren Bereich des Behälters als Verdampfer (3) einer Wärmepumpe eingesetzt wird.

6. Druckloser thermischer Systemspeicher (2) aus Anspruch 1 bis 5, **dadurch gekennzeichnet, dass** die Wärmetaucher (2 bis 6) als Gegenstrom und oder als Gleichstrom Wärmeüberträger konstruiert werden.

7. Druckloser thermischer Systemspeicher (1) aus Anspruch 1 bis 6, **dadurch gekennzeichnet, dass** ein Anschluss (24) an das Wärmeträger Medium zwischen dem Kaltwasser Anschluss (4) und dem Frischwasser Anschluss (6) vorgesehen ist.

8. Druckloser thermischer Systemspeicher (1) aus Anspruch 1 bis 7, **dadurch gekennzeichnet, dass** ein Anschluss (26) unterhalb des Kondensators (2) angebracht wird.

9. Druckloser thermischer Systemspeicher (1) aus Anspruch 1 bis 8, **dadurch gekennzeichnet, dass** ein Temperatur Fühler (11) unterhalb des Anschlusses (27) für den Heizungsvorlauf angebracht wird.

10. Druckloser thermischer Systemspeicher (1) aus Anspruch 1 bis 9, **dadurch gekennzeichnet, dass** ein Temperatur Fühler (12) auf Höhe des Frischwasser Anschlusses (6) angebracht wird.

11. Druckloser thermischer Systemspeicher (1) aus Anspruch 1 bis 10, **dadurch gekennzeichnet, dass** ein Temperatur Fühler (13) im oberen Bereich des Verdampfers (3) angebracht wird.

12. Druckloser thermischer Systemspeicher (2) aus Anspruch 1 bis 11, **dadurch gekennzeichnet, dass** Umwälzpumpen, die an das Wärmeträger Medium angeschlossen sind, zeitverzögert und getaktet betrieben werden.

13. Druckloser thermischer Systemspeicher (1) aus Anspruch 1 bis 12, **dadurch gekennzeichnet, dass** einige oder alle Anschlüsse (25) an das Wärmeträger Medium mit einem Rohr ausgestattet sind, das mehrere, insbesondere seitliche, Löcher aufweist.

14. Druckloser thermischer Systemspeicher (1) aus Anspruch 1 bis 13, **dadurch gekennzeichnet, dass** eine Platte mit Löchern (9) zwischen dem Verdampfer (3) und dem Kaltwasser Anschluss (4) angebracht wird.

15. Druckloser thermischer Systemspeicher (1) aus Anspruch 1 bis 14, **dadurch gekennzeichnet, dass** eine Platte mit Löchern (9) oberhalb vom Frischwasser Anschluss (6) beziehungsweise zwischen zwei separaten Wärmetauschern für das Frischwasser und das Warmwasser vorgesehen wird.
